# EUROPEAN PATENT APPLICATION

(11) **EP 2 151 641 A1**
(43) Date of publication of application: **10.02.2010**
(21) Application number: 08718450.3
(22) Date of filing: 31.01.2008
(51) Int. Cl.: F24J 2/34

(54) **MACHINE COMPRISING A SOLAR HEAT SOURCE**

(30) Priority: 01.03.2007 ES 200700538
(71) Applicant: Wattpic Energia Intell.ligent, S.l., 17005 Girona (ES)
(72) Inventor: SUREDA ALSINA, Francesc, I., E-17005 Girona (ES); SALAS PRATS, Josep María, E-17005 Girona (ES); JORDA BATALLER, Josep, E-17005 Girona (ES); MELSOM, Juan, E-17005 Girona (ES); VIDAL MORENO, Jordina, E-17005 Girona (ES)
(74) Representative: Morgades y Manonelles, Juan Antonio
(86) International application number: PCT/ES2008/000050
(87) International publication number: WO 2008/104619

(57) **Abstract**

The invention relates to a structure containing components for collecting, transferring and storing heat energy originating form solar energy, wherein said components are pre-coupled and mounted in the factory so as to form a compact machine that is ready to be installed and connected directly to the power grid at the installation location. The aforementioned components include solar collectors which transform solar energy into heated water and accumulators which form water containers for storing the energy collected by the solar panels and transmitting same to the next accumulator through a series of successive fluid circulation circuits which are actuated by respective electric pumps and provided with expansion reservoirs and vessels and valves for the operation thereof, which is controlled by a central solar heat source control system which is connected to a number of the above-mentioned electric pumps and to a solar sensor.

## Description

### OBJECT OF THE INVENTION

The object of the present invention is a compact machine to supply heat for the domestic, industrial, or tertiary sector, or any other user or application requiring heat based on renewable energy sources.

### FIELD OF THE INVENTION

The present invention refers to the use of alternative energies, such as solar energy heat, which uses a fluid that circulates through ducts and is heated by the sun's rays, and whose heat is taken advantage of to be transferred for any use, such as, for example, heating sanitary water, preferably for domestic use.

### BACKGROUND TO THE INVENTION

On the market there are many types of apparatus or machines that use solar energy heat by way of panels with ducts through which a liquid circulates, for example, the water from the piped water supply and which is heated to a certain degree to be used by the user consumer.

The apparatus, machines, arrangements, or installations of thermal solar panels of this type that are known have several serious drawbacks, among which it can be mentioned that the series of components that normally make up the device, facility, or installation have been manufactured individually by their respective manufacturers, with guarantees that are also individual and different. The series of components are assembled practically entirely in the place where they are placed to be used, and therefore, the corresponding apparatus, arrangement, or installation does not have a single, overarching guarantee. In addition, assembling them requires highly qualified workers, because they must know the components from different sources that must be mounted, how to put them together correctly, and the resulting device.

### SUMMARY OF THE INVENTION

The present invention eliminates the aforementioned drawbacks because the solar heat source machine is assembled entirely in a factory, manufactured serially, well documented, entirely guaranteed, and allowing easy maintenance, which facilitates its connection to the corresponding building, and guaranteeing proper functioning throughout its lifespan, providing 100 % of the energy necessary. All of this facilitates the implementation of solar energy heat in different fields of application.

The solar heat source machine of the invention essentially consists of a mobile, rigid, waterproof, prismatic structure, closed hermetically on all sides, containing in its interior all the components previously assembled and mounted in the factory, forming a compact machine ready to be installed and connected directly to the power grid at the installation location. Its components consist of at least some solar collectors laid out on the upper and frontal sides of the structure, which transform solar energy into heated water, accumulators that consist of water tanks that store all the energy collected by the solar panels during the day. The first solar accumulator is a solar tank that accumulates solar energy in a closed-circuit water tank, a second accumulator of sanitary hot water is a pre-accumulator that pre-heats the sanitary hot water, and a third sanitary hot water accumulator receives the pre-heated water from the second accumulator and heats it to the temperature of consumption to send it to the sanitary hot water circuit of the corresponding installation through the impulse pipe, a boiler with a chimney for possible support of the third accumulator in case the solar production solar of the collectors is insufficient, a plate changer between the solar collectors and the first accumulator so that it receives the heat energy, constituting a primary closed circuit in which the fluid circulating is preferably glycol water. A heat exchanger coiled in the second accumulator transmits the energy to the sanitary hot water circuit constitutes a secondary circuit, including the piping of the two circuits, primary and secondary, expansion lines and tanks, the corresponding valves of different types and electric pumps. Some of these electric pumps are connected to the solar heat source's control centre, which is in turn connected to the solar sensor; the control centre adapts the heat offer to the demand, avoiding overheating, and turns on a vertical central axis of rotation to follow the solar azimuthal projection.

According to the invention, the structure is compact, sturdy, and insulated, presenting a box configuration with a rectangular longitudinal section, potentially unfolding, the upper and frontal sides of which, with respect to the sun, have the solar collectors placed on them in a tilted position, the walls of the structure being insulated. The structure can turn all together, following the sun, to optimise the capturing of photons.

The solar collectors consist of vacuum tubes that are tilted 45° and connected in parallel, and which are interconnected by way of a plate exchanger with the first accumulator, to which they transmit the heat; the solar collectors and the plate exchanger constitute a primary closed circuit, which is driven by an electric pump. The number of collectors is six and they are arranged in two rows of three elements, connected in parallel. This configuration may be adapted to other versions in order to obtain greater power. Each vacuum tube presents a surface area of 3 m², and the total surface area of the capturing of sun rays is 18m². The accumulators are water tanks that store the energy collected by the solar panels, and they are of several types, characterised by the fact that they comprise: a) a first solar tank, which is connected to the solar panels by way of a plate exchanger, forming the first accumulator and the plate exchanger a closed circuit that is driven by an electric pump, and from the first accumulator comes another closed circuit comprising a coil placed on the inside of the second accumulator, and this another closed circuit is driven by an electric pump, b) a second accumulator that consists of a tank, which pre-heats the sanitary hot water passing it to the next accumulator, and c) a third accumulator which receives the cold water from the water supply mains, and supplies the sanitary hot water through the pipe, that it receives from the second pre-heating accumulator, and which heats the water to the appropriate temperature for supply. If the heat production is insufficient, it has a back-up boiler that receives the gas for its operation from the feed pipe; this back-up boiler and the third accumulator are connected to each other by a closed circuit that is driven by an electric pump comprising a coil placed on the inside of said third accumulator. The turning means that create the movement to follow the solar azimuthal projection is made up of a fixed part and a movable part, the fixed part of which is a circular base with a groove for the circulation of the roller and a zipper in the upper part and whose movable part fits into the structure that makes up the device and houses the geared motor for the turning movement and two locking brakes, so that the structure turns on a vertical rotating axis.

The machine may be adapted to the production of cold in the summer with domestic solar energy. These and other characteristics will be best made apparent by the following detailed description whose understanding will be made easier by the accompanying three sheets of drawings showing a practical embodiment being cited only by way of an example not limiting the scope of the present invention.

### DESCRIPTION OF THE DRAWINGS

In the drawings:
Figure 1 is a perspective view of the machine of the invention.
Figure 2 is a cross section view of the structure of the machine illustrating the position of the solar collectors.
Figure 3 is a front view of the machine. Figure 4 is a top plan view of the machine showing the solar installation and the circulation of sanitary hot water.
Figure 5 is a lengthwise front elevation view showing the tanks and other components essentially lengthwise.
Figure 6 is a detail of the means of azimuthal turning and the corresponding ducts.
Figure 7 illustrates the diagram of the structure and operation of the machine of the invention.

### DETAILED DESCRIPTION OF ONE FORM OF PREFERRED EMBODIMENT

In accordance with the drawings, the solar heat source machine of the invention with general reference (1) consists of a rigid, prismatic structure (2), closed hermetically on all sides, containing in its interior all the components previously assembled and mounted in the factory, forming a compact machine ready to be installed and connected directly to the power grid at the installation location.

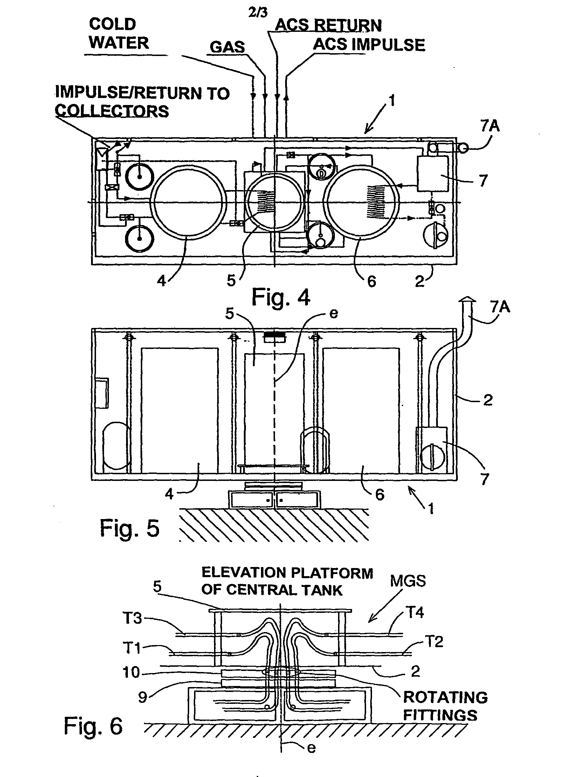

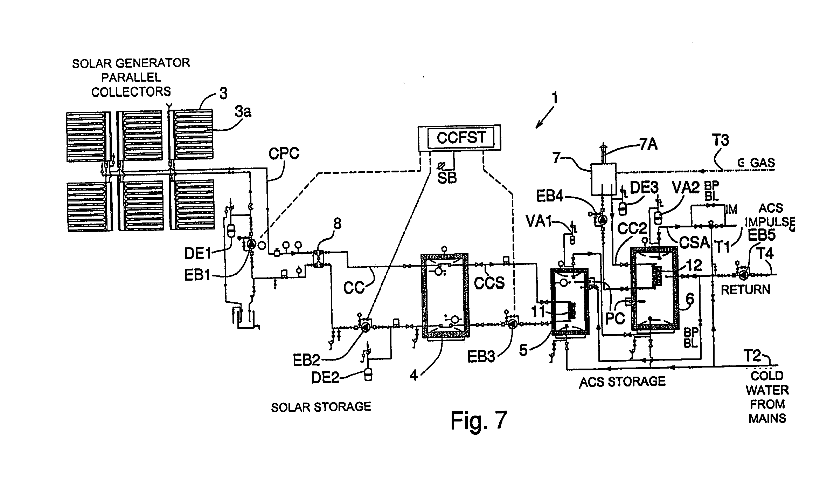

The components of the machine consist of at least some solar collectors (3) which are placed on the upper (2A) and frontal sides (2B) of the structure (2), which transform solar energy into heated water, accumulators (4, 5, β) that consist of water tanks that store the energy collected by the solar panels (3) over the course of the day, of which a first solar accumulator (4) is a solar tank that accumulates solar energy in a water tank, each in closed circuits (see figures 4 and 7) before (CC) and afterwards (CCS) the first accumulator (4), which transmits the energy to the next accumulator, a second accumulator (5) for sanitary hot water (ACS) that constitutes a pre-accumulator that pre-heats the sanitary hot water, and a third accumulator (6) of sanitary hot water (ACS) that receives the pre-heated water from the second accumulator (5) and heats it up to the temperature of consumption to go to the secondary open circuit (CSA) of sanitary hot water (ACS) of the corresponding installation through the impulse duct (T1). There is also a gas boiler (7) with a chimney (7A) for possible support for a third accumulator if the solar production of the collectors is insufficient, a plate exchanger (ICP) between the solar collectors (3) and the first accumulator (4), so that it receives the heat, constituting a closed primary circuit (CPC) between the solar collectors (3) and the plate exchanger (8), in which the fluid in circulation is preferably glycol water. There is a heat exchanger coiled inside of the second accumulator (5) which transmits the energy to the sanitary hot water (ACS) circuit and which constitutes a secondary open circuit (CSA), made up of the primary circuits (CPC), closed (CC), between the plate exchanger (8) (ICP) and the first accumulator (4), and closed (CCS) after of the first accumulator (4), closed (CC2) between the third accumulator (6) and the boiler (7), and a secondary (ACS) impulse circuit (CSA), some expansion lines (VA1, VA2), and expansion tanks (DE1, DE2, DE3), corresponding valves of different types, and some electric pumps (EB1, EB2, EB3, EB4, EB5). The electric pumps (EB1) foreseen in the circuit (CPC), (EB2) foreseen in a closed circuit (CC) and the (EB3) foreseen in a closed circuit (CCS), whose last two circuits are linked to the first accumulator, will be described below.

The aforementioned electric pumps (EB1, EB2 and EB3) are connected to a solar heat source control centre (CCFST) that is in turn connected to a solar sensor (SB), the control centre of which adapts the thermal offer to the demand, avoiding overheating.

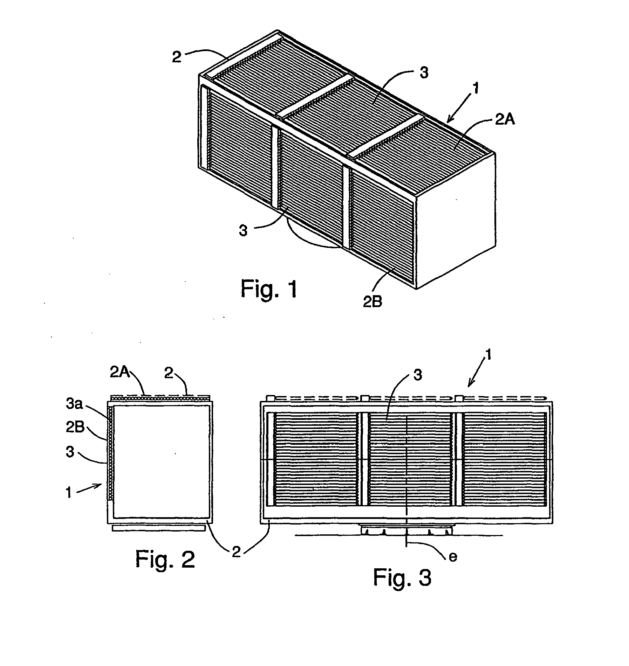

A turning means (MGS) on a vertical central axis of rotation (e) follows the solar azimuthal projection. According to the invention, the structure (2) is compact, sturdy, and insulated, presenting a box configuration with a rectangular longitudinal section (see figures 1, 2, 3), on whose upper (2A) and frontal sides (2B) with respect to the sun the solar collectors (3) are placed, tilted, and the walls of the structure (2) are made on an interior metallic structure with stiff polyurethane foam and with two outer strips of polyester fibres as a sort of sandwich finish.

For their part, the solar collectors (3) consist of vacuum tubes (3a) that are connected in parallel (see figure 7), and interconnected by way of a plate exchanger (8) with the first accumulator (4) to which they transmit thermal energy, constituting the closed primary circuit (CPC) between the plate exchanger (8) and the solar panels (3) the circuit of which is driven by an electric pump (EB1), with the vacuum tubes placed tilted at a 45° angle, and they make an azimuthal turn following that made by the structure (2) on which they are mounted.

Preferentially, the number of collectors is six and they are arranged in two rows of three elements, all of them connected in parallel, as is shown in detail in figure 7, which shows a general diagram of the machine of the invention.

The vacuum tubes (3a) that make up the solar collectors each have a surface area of 3 m², so the total surface area of solar collection is 18 m², preferably.

For their part, the accumulators (4, 5, 6) are water tanks that store the energy collected by the solar panels, and they are of several types, and the type shown is made up of: a) a first solar tank (4), preferably with a 2000 L capacity, which is connected to the solar panels (3) by way of a plate exchanger (8), the first accumulator (4) and the plate exchanger forming a closed circuit (CC), and from the first accumulator (4) comes a closed circuit (CCS) comprising a coil (11) placed on the inside of the second accumulator (5), through which and driven by an electric pump (EB3), thermal energy is transmitted to pre-heat the sanitary hot water (ACS) to the third accumulator (β), whose closed circuit (CC) is driven by an electric pump (EB2), b) a second accumulator (5) that consists of a tank, preferably with a 1000 L capacity, which pre-heats the sanitary hot water (ACS) passing it to the next accumulator , and c) a third accumulator (β), preferably with a 2000 L capacity, which on one hand receives the cold water from the piped water supply (T2), and on the other hand supplies the sanitary hot water (ACS) through the pipe (T1) that it receives from the second pre-heating accumulator (5), and which heats the water to the appropriate temperature for supply to the consumer. If the heat production is insufficient, it has a back-up boiler (7) of gas or another source of energy that receives the gas for its operation from the feed pipe (T3); this back-up boiler (7) and the third accumulator (6) are connected to each other by a closed circuit (CC2) that is driven by an electric pump (EB4), comprising a coil (12) placed on the inside of the third accumulator (6) and an expansion tank (DE3).

Analogously, the closed primary circuit (CPC) is made up of an expansion tank (DE1), the electric pump (EB1) that works it, and the corresponding valves; the closed circuit (CC) is made up of an expansion tank (DE2) between the first accumulator and the plate exchanger (8), and it is driven by the electric pump (EB2). The closed circuit (CCS) of the first accumulator (4), which has a coil (11) in the second accumulator (5), is made up of the electric pump (EB3) that drives it, and each one's expansion lines (VA1) and (VA2), respectively, to the free outputs of the second accumulator (5) and of the third accumulator (6) in the impulse of the sanitary hot water (ACS) to the consumer by the ducts (T1), whose second (5) and third (6) accumulators have cathodic protection (PC). The closed circuit (CC2) between the boiler (7) and the third accumulator (6) is made up of an expansion tank (DE3) and the electric pump (EB4) that drives it, along with the corresponding valves.

The turning means (MGS) (see figure 6) that create the movement to follow the solar azimuthal projection preferably consist of a set of all the bodies of transmission, locking and mechanical safety factors, and is made up of a fixed part (9) and a movable part (10), the fixed part (9) of which is a circular base with a groove for the circulation of the roller and a zipper in the upper part -not illustrated- and whose movable part (10) fits into the structure (2) that makes up the device and houses the geared motor -not illustrated- for the turning movement and two locking brakes -not illustrated-of the transmission when required, so that the structure turns on a vertical rotating axis (e).

The invention foresees that the structure may possibly also include a zenith follow-up mechanism, if the solar collectors incorporated into the structure so allow and/or require. The connecting ducts from the structure from/to the exterior consist of a duct for the entry of cold water from the piped water supply (T2) to the second (5) and third (6) accumulators, an impulse tube (T1) of sanitary hot water (ACS) from the third (6) accumulator for supply to the consumer and to which pipe it is connected by way of a bypass cold water entry duct (T2), a return pipe (T4) of sanitary hot water to the third and the second (5) accumulators, which has an electric pump (EB5), and which is connected to this bypass, and a pipe (T3) for the supplying of gas to the back-up boiler (7).

The invention foresees its adaptation to the production of cold in the summer with domestic solar energy, and because using high-temperature solar collectors allows the generation of thermo-electric solar energy, producing electricity on a small scale.

In addition, it is noted that in the machine of the present invention, a anti-Legionella check is unnecessary because the solar circuit is independent of the consumption of sanitary hot water (ACS). The two only anti-Legionella bypass valves (BP/AL) are located in the circuit of (ACS) as is shown in the diagram of figure 7.

The machine is entirely assembled in the workshop by specialised, competent operators, who serially produce a compact machine, which is ready for its connection to the building or home in question by way of a very simple mounting or installation, which is easy to maintain, with a long lifespan, and entirely guaranteed.

## Claims

1. A solar heat source machine, of the type comprising solar collectors for capturing energy to produce heat, applicable mainly but not exclusively for sanitary hot water, **characterised by** consisting of a mobile, rigid, waterproof, prismatic structure (2) closed on all sides, which contains inside all the components necessary for transferring and accumulating thermal energy, which are mounted and previously joined in the workshop, forming a compact machine ready to be installed and connected directly to the power grid at the installation location.

2. Machine, according to claim 1, applicable mainly for the supply of sanitary hot water, **characterised** because the components are made up of at least some solar collectors (3) positioned on the upper (2A) and frontal (2B) sides of the structure (2), which transform solar energy into heated water; accumulators (4, 5, 6) that consist of water tanks that store the energy collected by the solar panels (3) over the course of the day, of which a first solar accumulator (4) is a solar tank that accumulates solar energy in a water tank in closed circuit (CC/CCS) and transmits the energy to the next accumulator, a second accumulator (5) for sanitary hot water (ACS) that constitutes a pre-accumulator that pre-heats the sanitary hot water, and a third accumulator (6) of sanitary hot water (ACS) that receives the pre-heated water from the second accumulator (5) and heats it up to the temperature of consumption to go to the secondary open circuit (CSA) of sanitary hot water (ACS) of the corresponding installation through the impulse duct (T1); a boiler (7) with a chimney (7A) for possible support for a third accumulator if the solar production of the collectors is insufficient; a plate exchanger (ICP) between the solar collectors (3) and the first accumulator (4), so that it receives the heat, constituting a closed primary circuit (CPC) between the solar collectors (3) and the plate exchanger (8), in which the fluid in circulation is preferably glycol water; a heat exchanger coiled inside of the second accumulator (5) which transmits the energy to the sanitary hot water (ACS) circuit, which constitutes a secondary open circuit (CSA); comprising the primary circuits (CPC), before closed (CC), between the plate exchanger (8) and the first accumulator (4), and closed (CCS) after of the first accumulator (4), closed (CC2) between the third accumulator (6) and the boiler (7), and a secondary (ACS) impulse circuit (CSA), some expansion lines (VA1, VA2), and expansion tanks (DE1, DE2, DE3), corresponding valves of different types, and some electric pumps (EB1, EB2, EB3, EB4, EB5), of which the electric pumps (EB1, EB2 and EB3) are connected to the solar heat source's control centre (CCFST), which is in turn connected to the solar sensor (SB); the control centre adapts the heat offer to the demand, avoiding overheating, and turn means (MGS) turns on a vertical central axis of rotation (e) to follow the solar azimuthal projection.

3. Machine comprising a solar heat source, according to claim 1, **characterised in that** the structure (2) is compact, sturdy, and insulated, presenting a box configuration with a rectangular longitudinal section, on whose upper (2A) and frontal sides (2B) with respect to the sun the solar collectors (3) are placed, tilted, and the walls of the structure (2) are insulated, and the structure can turn all together, following the sun, to optimise the capturing of photons.

4. Machine comprising a solar heat source, according to claim 1, **characterised in that** the solar collectors (3) consist of vacuum tubes (3a) that are connected in parallel, and interconnected by way of a plate exchanger (8) with the first accumulator (4) to which they transmit thermal energy, constituting the closed primary circuit (CPC) between the plate exchanger (8) and the solar panels (3) the circuit of which is driven by an electric pump (EB1), with the vacuum tubes placed tilted at a 45° angle, and they make an azimuthal turn following that made by the structure (2) on which they are mounted.

5. Machine comprising a solar heat source, according to claim 4, **characterised in that**, preferentially, the number of collectors is six and they are arranged in two rows of three elements, all of them connected in parallel.

6. Machine comprising a solar heat source, according to claim 5, **characterised in that** the solar collectors solar are vacuum tubes (3a) preferably each have a surface area of 3 m², so the total surface area of solar collection is 18 m².

7. Machine comprising a solar heat source, according to claim 1, wherein the accumulators (4, 5, 6) are water tanks that store the energy collected by the solar panels, and they are of several types, **characterised in that** comprises: a) a first solar tank (4), preferably with a 2000 L capacity, which is connected to the solar panels (3) by way of a plate exchanger (8), the solar panels and the plate exchanger forming a main closed circuit (MCC) that is driven by an electric pump (EB1), and from the first accumulator (4) and the plate exchanger (8) comes a closed circuit (CCS) comprising a coil (11) placed on the inside of the second accumulator (5), through which and driven by an electric pump (EB3), thermal energy is transmitted to pre-heat the sanitary hot water (ACS) to the next accumulator, b) a second accumulator (5) that consists of a tank, preferably with a 1000 L capacity, which pre-heats the sanitary hot water (ACS) passing it to the next accumulator, and c) a third accumulator (6), preferably with a 2000 L capacity, which on one hand receives the cold water from the water supply mains, and on the other hand supplies the sanitary hot water (ACS) through the pipe (T1) that it receives from the second pre-heating accumulator (5), and which heats the water to the appropriate temperature for supply to the consumer. If the heat production is insufficient, it has a back-up boiler (7) of gas or another source of energy that receives the gas for its operation from the feed pipe (T3); this back-up boiler (7) and the third accumulator (6) are connected to each other by a closed circuit (CC2) that is driven by an electric pump (EB4), comprising a coil (12) placed on the inside of the third accumulator (6).

8. Machine comprising a solar heat source, according to the previous claims, **characterised in that** the closed primary circuit (CPC) is made up of an expansion tank (DE1), the electric pump (EB1) that works it, and the corresponding valves; the closed circuit (CPC) is made up of an expansion tank (DE2), the electric pump (EB2) that works it, and valves between the first accumulator and the plate exchanger (8), the closed circuit (CCS) of the first accumulator (4) which has a coil (11) in the second accumulator (5), is made up of the electric pump (EB3) that drives it, and comprising each one's expansion lines (VA1) and (VA2) , respectively, to the free outputs of the second accumulator (5) and of the third accumulator (β) in the impulse of the sanitary hot water (ACS) to the consumer, whose second and third accumulators have cathodic protection (PC). The closed circuit (CC2) between the boiler (7) and the third accumulator (6) is made up of an expansion tank (DE3) and the electric pump (EB4) that drives it along with the corresponding valves.

9. Machine comprising a solar heat source, according to claim 1, **characterised in that** The turning means (MGS) that create the movement to follow the solar azimuthal projection consist of a set of all the bodies of transmission, locking and mechanical safety factors, and is made up of a fixed part (9) and a movable part (10), the fixed part (9) of which is a circular base with a groove for the circulation of the roller and a zipper in the upper part and whose movable part (10) fits into the structure (2) that makes up the device and houses the motor member for the turning movement and two locking brakes of the transmission when required, so that the structure turns on a vertical rotating axis (e).

10. Machine comprising a solar heat source, according to claim 9, **characterised in that** the structure may possibly also include a zenith follow-up mechanism, if the solar collectors incorporated into the structure so allow and/or require.

11. Machine comprising a solar heat source, according to the previous claims, **characterised in that** The connecting ducts from the structure from/to the exterior consist of a duct for the entry of cold water from the piped water supply (T2) to the second (5) and third (6) accumulators, an impulse tube (T1) of sanitary hot water (ACS) from the third (6) accumulator for supply to the consumer and to which pipe it is connected by way of a bypass cold water entry duct (T2), a return pipe (T4) of sanitary hot water to the third and the second (5) accumulators, which has an electric pump (EB5), and a pipe (T3) for the supplying of gas to the back-up boiler (7).

12. Machine comprising a solar heat source, according to the previous claims, **characterised in that** allows its adaptation to the production of cold in the summer with domestic solar energy, and using high-temperature solar collectors allows the generation of thermo-electric solar energy, producing electricity.
